Europäisches Patentamt

European Patent Office

Office européen des brevets

(11) Numéro de publication: **0 274 936 B1**

## (12) FASCICULE DE BREVET EUROPEEN

(45) Date de publication de fascicule du brevet: **18.03.92**

(51) Int. Cl.⁵: **A01B 69/00**, B62D 49/06, B60R 1/00

(21) Numéro de dépôt: **87402782.4**

(22) Date de dépôt: **08.12.87**

(54) **Procédé et dispositif de guidage optique à comparaison de perpectives pour engins agricoles.**

(30) Priorité: **15.12.86 FR 8617627**

(43) Date de publication de la demande:
**20.07.88 Bulletin 88/29**

(45) Mention de la délivrance du brevet:
**18.03.92 Bulletin 92/12**

(84) Etats contractants désignés:
**AT BE CH DE ES FR GB GR IT LI LU NL SE**

(56) Documents cités:
**AU-B- 4 094 678**
**FR-A- 1 219 667**
**US-A- 3 834 036**
**US-A- 4 393 596**

(73) Titulaire: **Ruelle, Jean-Claude**
**Magny Fouchard**
**F-10140 Vendeuvre sur Barse(FR)**

(72) Inventeur: **Ruelle, Jean-Claude**
**Magny Fouchard**
**F-10140 Vendeuvre sur Barse(FR)**

(74) Mandataire: **Gérardin, Robert Jean René**
**PROT'INNOV INTERNATIONAL SA Résidence**
**de l'Observatoire avenue Georges Clémen-**
**ceau Boîte Postale 2764**
**F-51066 Reims Cédex(FR)**

Rank Xerox (UK) Business Services

## Description

La présente invention concerne un procédé et un dispositif de guidage optique à comparaison de perspectives pour engins agricoles.

La mécanisation de l'agriculture a entraîné l'emploi de machines de grande largeur, tels que pulvérisateurs de traitement ou d'épandage d'engrais, semoirs rotatifs, etc..., afin de réduire le nombre de passages sur les champs cultivés de grande superficie. Pour assurer un traitement complet et uniforme des champs, le conducteur du véhicule tracteur doit définir nettement l'étendue couverte par la passe: ce qui entraîne un ralentissement de l'opération en cours, du fait que le conducteur de l'engin agricole perd du temps à détecter la lisière de sa passe précédente.

Il est donc apparu nécessaire de faciliter au conducteur la juxtaposition des bandes de terrain traité ou semé, en utilisant des moyens permettant aux engins de suivre un itinéraire parallèlement à une ligne donnée, en restant à une distance donnée, constante, de la précédente, en ligne droite comme en ligne courbe.

A l'origine, pour remédier à cette situation, le conducteur perdait du temps à disposer des repères aux extrémités des parcelles ou se faisait accompagner d'une ou de deux aides. Ces méthodes sont longues, coûteuses en main d'oeuvre et fastidieuses, surtout en parcours sinueux. Par ailleurs, on ne voit pas toujours l'extrémité du champ, et, si l'opérateur est trop accaparé par la trajectoire à suivre, il risque de relâcher la surveillance du travail effectué, qui peut ainsi perdre en qualité.

Divers moyens sont actuellement utilisés dans le domaine agricole pour faciliter le guidage des tracteurs ou autres machines.

On connaît un procédé utilisant des traceurs mécaniques qui, par le biais de disques ou de fraises, montés à l'extrémité de bras repliables hydrauliquement, fixés à l'avant du tracteur, tracent, lors du travail, un sillon sur le sol, correspondant à une bande ; afin que le conducteur n'ait plus qu'à la suivre, avec l'une des roues du tracteur, lors du passage sur la bande suivante.

Cette méthode de traçage mécanique ne permet, cependant, un calage correct, que si le déport de travail est inférieur à douze mètres, ce qui est rarement le cas. De plus, elle nécessite l'utilisation de traceurs lourds, encombrants et coûteux, qu'il faut, par l'intermédiaire de vérins hydrauliques, relever à chaque obstacle tels que pylônes, talus, fossés, etc...

D'autres méthodes sont utilisées pour permettre aux engins agricoles de grande largeur de se déplacer parallèlement à leur passage précédent. Parmi celles-ci, on peut citer:

- La méthode par semis de produit moussant, avec laquelle on matérialise une piste de guidage sous la forme de dépôts de mousse délimitant la bande (demande de brevet français **FR-A 1.550.736** et brevet Allemand **DE-A 1.557.835.**)

Cette méthode est utilisée principalement pour des machines atteignant, par leurs avant-bras, de grandes largeurs de travail, à l'extrémité desquels sont installées des buses à mousse, qui déposent une bande de mousse ou une légère dispersion de mousse sur la limite à travailler. L'inconvénient de cette méthode réside dans l'imprécision qui affecte l'établissement de la piste de mousse. Elle nécessite le montage, à bord de la machine utilisant ce procédé, d'un générateur de mousse rendant obligatoire la présence d'une source d'air comprimé. En outre, la persistance des dépôts de mousse n'est que d'environ 40 minutes, dans les conditions les plus favorables : absence de vent et de pluie. De même, cette méthode nécessite, au passage suivant, que l'opérateur cale visuellement l'extrémité de la rampe, qui se trouve en général derrière lui, à la verticale de la trace de produit moussant déposé lors du passage précédent.

- Les dispositifs électroniques de guidage, lesquels présentent l'inconvénient d'imposer l'installation préalable d'une infrastructure au sol, matérialisée par des câbles enterrés, raccordés à un générateur à basse fréquence (demande de brevet Français **FR-A 1.497.619**) ou par des câbles tendus à chaque extrémité de la parcelle (demande de brevet Français **FR-A 1.309.394**).

Il est connu, d'autre part, une autre méthode de délimitation du tracé des bandes, elle consiste à utiliser simultanément un véhicule tracteur guide et une machine agricole disposée parallèlement à celui-ci. Ce tracteur guide se déplace pendant le travail, constamment à la même distance de la machine agricole ou du tracteur qui l'entraîne, tout en étant décalé latéralement de sa largeur de travail. Cette largeur de travail est contrôlée au moyen d'une mesure faite par radar (demande de brevet Français **FR-A 2.465.399**) ou d'un câble, de longueur réglable par l'intermédiaire d'un touret à roue libre, reliant le tracteur guide à la machine agricole ou au tracteur qui l'entraîne (demande de brevet Français **FR-A 2.532.147**). Cette méthode nécessite un coût de main d'oeuvre élevé, et un investissement important du fait de l'utilisation de deux tracteurs.

On connaît déjà des dispositifs de guidage optique, permettant de faire suivre, à un engin agricole, un itinéraire situé à une distance déterminée d'une ligne de référence, tels que ceux décrits dans les brevets français suivants:

- Brevet français **FR-A 1.219.667** concernant un dispositif de visée pour machines agricoles, à grande portée latérale, comprenant : un porte-viseur et un viseur réglable en hauteur, articulé par cardans sur un étrier support pour compenser les irrégularités de terrain et comportant deux points de mire qui fixent, avec précision, la ligne de visée. Compte-tenu de sa conception, ce dispositif de guidage par côté exige que l'attention du conducteur soit maintenue, ce qui entraîne une certaine fatigue de celui-ci, notamment aux niveaux des yeux et du cou. De plus, il n'est pas possible, avec ce dispositif, d'obtenir une ligne très droite.

- Brevet français **FR-A 2.408.990** ayant pour objet un dispositif optique de guidage de tracteur agricole selon des trajets équidistants, caractérisé en ce qu'il comprend: un support fixé au tracteur et s'étendant au-dessus de la partie avant de celui-ci ; un miroir plan capteur à couche réfléchissante tournée vers le sol, ce miroir étant fixé à la partie supérieure de ce support et inclinable de façon réglable autour d'un axe parallèle à l'axe de progression du tracteur et contenu dans le plan de visée, le plan de ce miroir capteur étant parallèle à ces axes et portant un repère visible du côté de la face réfléchissante située dans le plan de visée ; un miroir plan viseur à couche réfléchissante tournée vers le miroir plan capteur et vers les yeux du conducteur, ce miroir plan viseur étant fixé au dit support de manière que son plan soit perpendiculaire au plan de visée et inclinable de façon réglable autour d'un axe perpendiculaire à ce plan de visée, ce miroir viseur portant des repères alignés situés dans le plan de visée et visibles du côté de sa face réfléchissante ; et des moyens permettant de régler l'inclinaison des miroirs capteur et viseur. Un tel dispositif n'est utilisable qu'à vitesse lente, sur terrain plat à terre très souple, car il ne comporte pas de dispositifs permettant d'amortir les différentes vibrations engendrées par le véhicule porteur.

- Brevet français **FR-A 1.512.703**, ayant pour objet un dispositif de jalonnage et de repérage optique de guidage de véhicules, selon des trajets équidistants, comportant essentiellement un système optique constitué de deux miroirs plans convenablement inclinés, disposés l'un au dessus de l'autre, dont l'inférieur est disposé de façon à ce que ses normales soient contenues dans les plans verticaux parallèles à une trace colorée, préalablement déposée sur le sol lors du passage précédent par l'intermédiaire d'un traceur à mousse. Le miroir supérieur, parallèle à la trace colorée, donne une image de celle-ci, qui est renvoyée par le second miroir inférieur vers l'oeil de l'observateur à travers la fente verticale d'un collimateur, ladite image ne pouvant être observée, au centre de la fente dudit collimateur, que si le véhicule se trouve à une distance prédéterminée de ladite trace. Ce dispositif, présente l'inconvénient d'être compliqué et de ne pas comporter de système anti-vibration, de plus, il est nécessaire de visualiser sur le sol, par l'intermédiaire d'un traceur à mousse, la trajectoire du véhicule.

- Brevet des Etats-Unis d'Amérique **US-A 3.834.036**, concernant un système visuel de guidage constitué essentiellement de deux rubans, solidaires du véhicule, sur lesquels sont peints des repères régulièrement espacés, par rapport auxquels sont positionnés des curseurs, en fonction de la distance à conserver par le conducteur, par rapport à une ligne de référence. Un tel dispositif, très simple de conception, ne donne satisfaction que sur terrain plat et avec des lignes de référence droite ou à courbure régulière, ce qui est rarement le cas dans la pratique.

- Brevet Australien **AU-B-516.320**, ayant pour objet un dispositif constitué essentiellement de bras télescopiques, comportant un repère à leur extrémité, dont la longueur est réglée pour correspondre à la distance à conserver par rapport à la ligne de référence. Ce dispositif ne permet qu'un guidage très imprécis, étant donné les erreurs de paralaxe qu'il occasionne, en particulier sur des terrains irréguliers et vallonnés, et par l'attention permanente qu'il exige du conducteur, qui ne peut, de ce fait, anticiper les obstacles, les accidents de terrain et les courbes.

On connaît déjà un procédé et un dispositif de guidage à comparaison de perspective correspondant au préambule de la revendication 1 (brevet des Etats-Unis d'Amérique **US-A 4.393.596**). Le procédé consiste essentiellement à faire coïncider visuellement un segment de droite, porté par l'engin, avec la ligne de référence et à maintenir cette coincidence sur toute la longueur du parcours, en utilisant un dispositif constitué de bras télescopiques montés sur l'avant du tracteur, de supports télescopiques et orientables situés au niveau du pare-brise de l'engin et de deux bras inclinables, de longueur réglable, montés sur le rebord de chaque portière ; les bras et les supports télescopiques orientables étant munis, à leur extrémité, d'une tige à inclinaison et à orientation réglable et les bras inclinables, de longueur réglable, étant reliés, à leur extrémité supérieure, par une tige télescopique, de façon à pouvoir régler préalablement la position et l'alignement des dites tiges télescopiques, après avoir placé l'engin à la distance choisie de la ligne de référence, de façon à faire coïncider les segments de droite, ainsi matérialisé par les tiges, avec la dite ligne de référence. Le procédé utilisé ne permet pas d'anticiper les montées et les descentes, ni les éventuelles irrégularités et ni les courbures de la ligne de référence. Le dispositif, quant à lui, est assez complexe et exige un réglage préalable assez laborieux, qu'il est difficile de conserver compte tenu des vibrations transmises par l'engin et des manoeuvres de portières.

Le procédé et le dispositif, selon l'invention, visent à remédier à ces inconvénients en permettant aux conducteurs des véhicules équipés du dispositif de suivre un itinéraire équidistant d'une ligne donnée, droite ou courbe, sur terrain plat ou vallonné, de façon à réduire au strict minimum les manques et les recouvrements, ceci, avec un minimum d'investissement.

Le procédé de guidage à comparaison de perspective selon l'invention consistant à faire coïncider, avec une ligne de référence, tout ou partie d'une ligne de guidage **AB** passant par un point **A**, solidaire de l'engin, situé à l'avant de celui-ci, au niveau des yeux du conducteur, déterminée en fonction du déport **W**, à maintenir par rapport à la ligne de référence tracée sur le sol, de façon que ladite ligne de guidage **AB** soit située dans un plan passant par une ligne droite horizontale fictive, parallèle à la direction longitudinale de l'engin, passant par le point **A**, situé dans le plan de symétrie longitudinal de l'engin, et par la projection sur le sol de l'extrémité latérale d'un instrument tracté, solidaire de l'engin, ou par un point fictif **C** situé à une distance de l'engin correspondant à celle de la ligne de référence tracée sur le sol, se caractérise en ce que la forme et la position de la ligne de guidage **AB**, par rapport à l'engin, sont déterminées en réglant, tout d'abord, la hauteur du point situé sur l'avant **A** à la hauteur **H** de l'oeil du conducteur et en projetant, sur le sol, dans des plans perpendiculaires à la direction longitudinale de l'engin disposés arbitrairement entre le point situé sur l'avant **A** de l'engin et un point **B**, situé dans la ligne de guidage sur l'arrière de l'engin, la projection orthogonale, sur lesdits plans, de l'extrémité latérale correspondante de l'instrument tracté ou du point fictif **C** ; à faire coïncider, tout d'abord, le premier segment d'une ligne brisée constituant la ligne de guidage **AB** avec une ligne droite **Y** reliant le point situé sur l'avant **A** de l'engin à projection sur le sol, de la projection orthogonale sur le plan perpendiculaire arbitrairement choisi situé le plus en avant, de l'extrémité latérale correspondante de l'instrument tracté ou du point fictif **C**, à faire coïncider le segment suivant de la ligne de guidage **AB** avec une ligne droite reliant l'extrémité arrière du segment précédent à la projection sur le sol de la projection orthogonale, sur le plan perpendiculaire suivant, de l'extémité latérale correspondante de l'instrument tracté ou du point fictif **C** et à procéder ainsi, de proche en proche, par rapport à chacun des plans arbitraires suivants, jusqu'à ce que le dernier segment de la ligne de guidage **AB** coïncide avec une ligne droite **Z** reliant directement l'extrémité arrière du segment précédent à la projection sur le sol de l'extrémité latérale correspondante de l'instrument tracté, ou au point fictif **C**.

Selon un autre procédé de l'invention, l'image de la ligne de guidage **AB** est visualisée sur le pare-brise de l'engin par projection ou rétroprojection lumineuse, ou impression.

Selon un mode d'application du procédé, le dispositif selon l'invention est constitue essentiellement de deux profilés, articulés symétriquement l'un par rapport à l'autre, par leur extrémité avant, pliés chacun selon une ligne brisée entièrement située dans un plan passant par une droite horizontale **X** située dans le plan de symétrie longitudinale de l'engin, passant par le point situé sur l'avant **A** au niveau de l'oeil du conducteur, et par la projection sur le sol de l'extrémité latérale de l'instrument tracté ou le point fictif **C** correspondant ; le point situé sur l'avant **A** étant confondu avec le point de raccordement et d'articulation des deux profilés de guidage.

La position des profilés de guidage, par rapport à l'engin, est déterminée par l'intermédiaire de règles semi-circulaires graduées, solidaires de l'engin, et de curseurs coulissants sur les dites règles ; les deux règles graduées semi-circulaires, solidaires de l'engin, étant disposées dans des plans parallèles perpendiculaires à la direction longitudinale de l'engin.

Les graduations des règles semi-circulaires sont déterminées de façon à prendre en compte l'élévation de l'oeil du conducteur par rapport au sol et le déport **W** à conserver par rapport à la ligne de référence. La graduation, correspondant à une élévation de l'oeil et à un déport **W** particulier, est déterminée à l'aide d'une abaque.

Les curseurs coulissants prennent appui, sur les règles semi-circulaires graduées, par l'intermédiaire de deux galets, de profil approprié, situés d'un même côté, et d'une vis de pression située de l'autre côté, dans le plan médian des deux galets.

Les avantages obtenus grâce au procédé et au dispositif selon l'invention consistent essentiellement en ceci qu'il permet, en faisant appel à des moyens très simples, de faire coïncider les perspectives à l'infini; ce qui facilite grandement les déplacements en terrain vallonné et accidenté en suivant des lignes de référence de forme quelconque, sans que cela entraîne aucune gêne pour le conducteur qui peut ainsi, à son gré, contrôler le trajet à suivre et le trajet suivi, selon que son regard se porte sur l'avant ou sur les côtés de l'engin. L'intégration au dispositif des réglages, en fonction de la largeur des instruments tractés et la détermination de ceux-ci à l'aide d'une abaque, rend quasi immédiate l'adaptation du dispositif à la largeur de l'instrument tracté. La simplicité de ce dispositif et de son mode d'emploi rendent celui-ci finalement adaptable sur une grande diversité d'engins, par l'utilisateur lui-même.

D'autres caractéristiques et avantages apparaîtront dans la description qui va suivre d'un mode de réalisation simplifié de l'invention montée sur un tracteur agricole, donné à titre d'exemple non limitatif au regard des dessins annexés sur lesquels :

- la figure 1 représente une vue en perspective d'un tracteur agricole équipé d'un dispositif selon l'invention.
- la figure 2 représente une vue en perspective partielle de la partie avant d'un tracteur équipé d'un dispositif selon l'invention, en évolution par rapport à une ligne de référence droite.
- la figure 3 représente une vue en perspective partielle de la partie latérale avant droite d'un tracteur équipé d'un dispositif selon l'invention, en évolution par rapport à une ligne de référence sinueuse.
- la figure 4 représente l'abaque de réglage du dispositif en fonction du déport imposé et de l'élévation de l'oeil du conducteur.

Les figures représentent un dispositif de guidage à comparaison de perspective, monté à l'avant d'un tracteur agricole **1**, constitué essentiellement de deux profilés de guidage constitués de trois segments **2**, **3** et **4**, reliés et articulés à l'avant par rapport à un point **A**, situé au niveau de l'oeil du conducteur, et solidarisés au tracteur, de façon réglable, par l'intermédiaire de règles semi-circulaires **5** comportant des graduations **6** et de curseurs coulissants **7**.

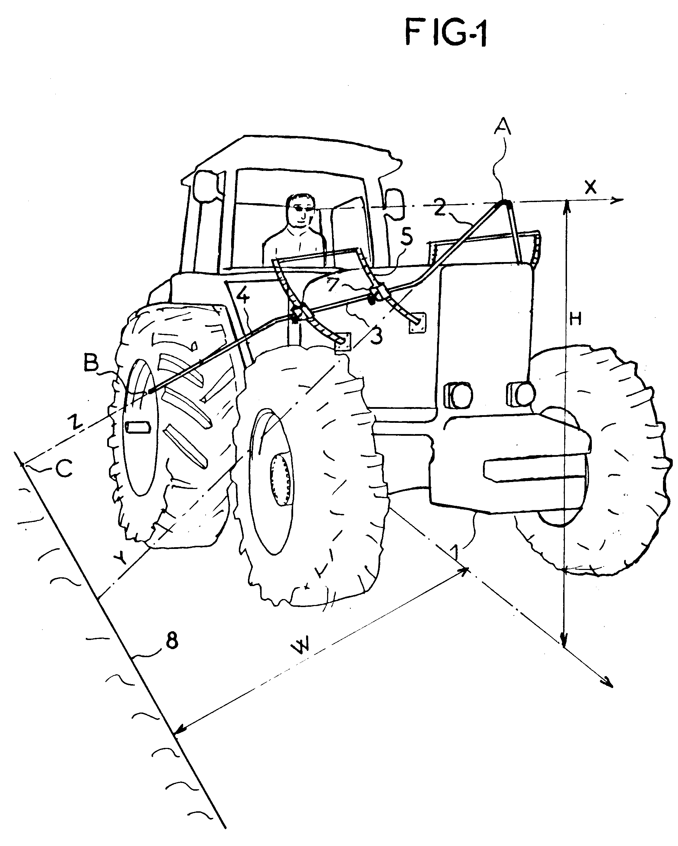

En examinant la figure **1**, on remarque que la droite **X**, qui relie l'oeil du conducteur du tracteur **1** au point **A**, situé au point de raccordement des deux profilés de guidage, constitue l'arête supérieure d'un prisme dont les côtés sont définis par la position des profilés de guidage par rapport au tracteur. En effet, les droites **Y** et **Z**, prolongeant latéralement respectivement les segments **2** et **4** d'un profilé de guidage, rejoignent la ligne de référence **8** que doit suivre le tracteur.

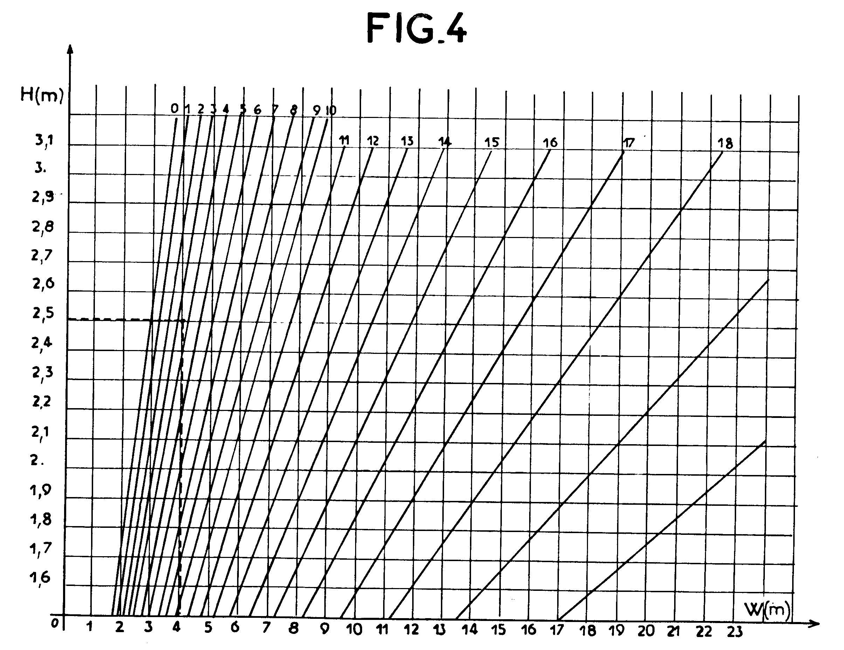

Aussi, selon le déport **W** que l'on désirera conserver pour le tracteur **1**, par rapport à la ligne de référence **8**, il suffira de régler la position, par rapport au dit tracteur **1**, des profilés de guidage, en agissant sur les curseurs **7** des règles semi-circulaires **5** pour amener ceux-ci au niveau de la graduation **6** correspondant au déport **W**, choisi en utilisant l'abaque de la figure **4**, puisque ce réglage fera coïncider les droites **Y** et **Z** avec la nouvelle ligne de référence choisie.

Toutefois, lors de la mise en place du dispositif sur le tracteur ou d'un changement de taille important du conducteur, il y a lieu de tenir compte, lors du réglage, de la hauteur **H** des yeux du conducteur par rapport au sol et de la distance **W** à conserver par rapport à la ligne de référence **8** existant sur le sol.

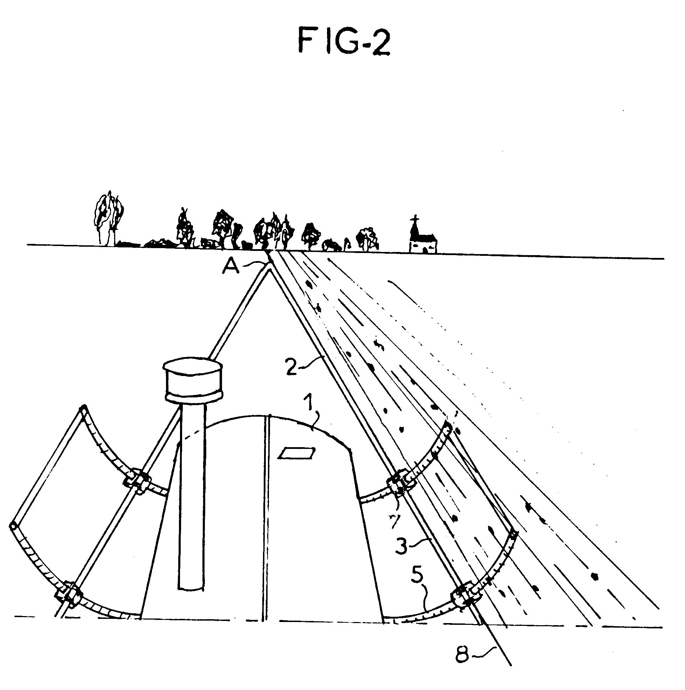

En examinant la figure **2** on remarque que, lorsque le dispositif est bien réglé, comme il a été indiqué ci-dessus, il suffit au conducteur d'assurer la concordance visuelle du profilé de guidage, dont les segments qui le constituent paraissent alignés, avec, dans cet exemple, le bord **8** de la surface de terrain précédemment travaillée, pour que le déport latéral **W** du tracteur soit suffisamment précis afin que l'extrémité latérale correspondante de l'outil coïncide avec la trace la plus proche, et, qu'ainsi, la totalité du terrain puisse être travaillée ou traitée sans recouvrement ni manque.

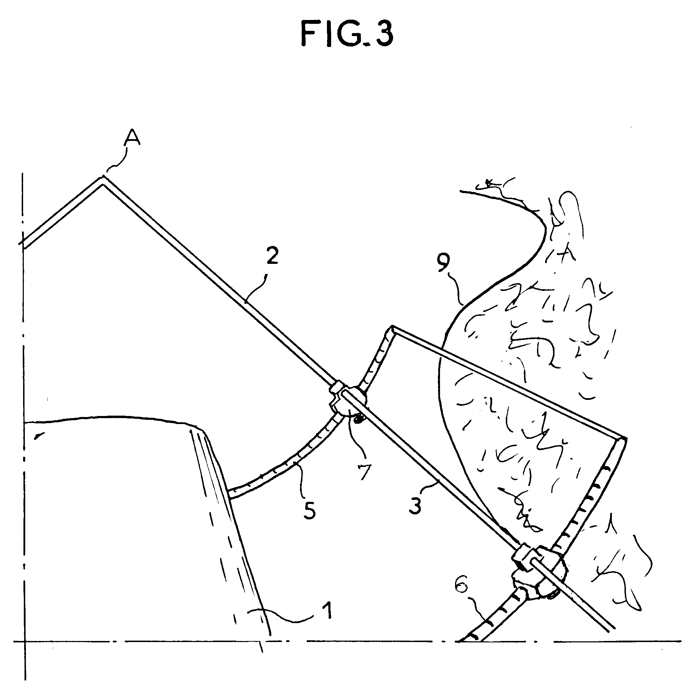

En se rapportant à la figure **3** on remarque que, lorsqu'un engin équipé du dispositif doit se déplacer le long d'une ligne de référence sinueuse **9**, telle que la bordure d'un champ, en conservant un déport **W** précis par rapport à celle-ci, il suffit de maintenir la tangence du profilé de guidage correspondant avec la dite ligne sinueuse pour que le déport soit conservé avec précision.

Un tel dispositif peut être utilisé aussi dans le cas où un déport **W** précis doit être conservé par rapport au bord d'une piste ou au bord d'une route, pour un engin se déplaçant sur le sol, ou par rapport au bord d'un canal, d'une digue ou d'un quai, pour des engins flottants.

En examinant l'abaque reproduite à la figure **4**, on remarque que, sur celle-ci, ont été tracées un certain nombre de droites correspondant au numéro des graduations **6** existant sur les règles semi-circulaires **5**. Il suffit donc, connaissant la hauteur **H** de l'oeil du conducteur par rapport au sol et le déport **W** à conserver par rapport à la ligne de référence de déterminer, sur l'abaque, le point correspondant à ces coordonnées et en déduire, ainsi, le réglage des curseurs coulissants **7** par rapport aux règles circulaires **5**. Dans l'exemple tracé sur l'abaque, correspondant à une élévation **H** de l'oeil du conducteur de 2.50 m et à un déport **W** de 4 m, les curseurs coulissants **7** devront être positionnés devant la graduation 3,5.

**Revendications**

1. Procédé de guidage à comparaison de perspective, pour engins agricoles ou autres, consistant à faire coïncider avec une ligne de référence (8) existant sur le sol, tout ou partie d'une ligne de guidage (AB) passant par un point (A), solidaire de l'engin, situé à l'avant de celui-ci, au niveau des yeux du conducteur, déterminée en fonction du déport (W) à maintenir par rapport à la ligne de référence (8) tracée sur le sol, de façon que la dite ligne de guidage (AB) soit située dans un plan passant par une ligne droite horizontale fictive (X), parallèle à la direction longitudinale de l'engin, passant par le point (A), située dans le plan de symétrie longitudinale de l'engin, et par la projection sur le sol de l'extrémité latérale d'un instrument tracté, solidaire de l'engin, ou par un point fictif (C) situé à une distance (W) de l'engin, correspondant à celle de la ligne de référence (8) tracée sur le sol, caractérisé en ce que la forme et la position de la ligne de guidage (AB) par rapport à l'engin (1) sont déterminées en réglant, tout d'abord, la hauteur du point (A), situé sur l'avant, à la hauteur (H) de l'oeil du conducteur de l'engin et en projetant sur le sol, dans des plans perpendiculaires à la direction longitudinale de l'engin disposés arbitrairement entre le point situé sur l'avant de l'engin (A) et un point (B), situé dans la ligne de guidage (AB) sur l'arrière de l'engin, la projection orthogonale, sur les dits plans, de l'extrémité latérale correspondante de l'instrument tracté ou du point fictif (C) ; à faire coïncider, tout d'abord, le premier segment (2) d'une ligne brisée constituant la ligne de guidage (AB) avec une ligne droite (Y) reliant le point situé sur l'avant (A) de l'engin à la projection, sur le sol, de la projection orthogonale sur le plan perpendiculaire arbitrairement choisi situé le plus en avant de l'extrémité latérale correspondante de l'instrument tracté ou du point fictif (C) à faire coïncider le segment suivant (3) de la ligne de guidage (AB) avec une ligne droite reliant l'extrémité arrière du segment précédent (2) à la projection sur le sol de la projection orthogonale sur le plan perpendiculaire suivant, de l'extrémité latérale correspondante de l'instrument tracté ou du point fictif C et à procéder ainsi, de proche en proche, par rapport à chacun des plans arbitraires suivants, jusqu'à ce que le dernier segment (4) de la ligne de guidage (AB) coïncide avec une ligne droite (Z) reliant directement l'extrémité arrière du segment précédent (3) à la projection, sur le sol, de l'extrémité latérale correspondante de l'instrument tracté, ou au point fictif (C).

2. Procédé selon la revendication 1, caractérisé en ce que l'image de la ligne de guidage (AB) est visualisée sur le pare-brise de l'engin par projection lumineuse directe, rétroprojection ou impression.

3. Dispositif d'application du procédé selon les revendications 1 et 2, caractérisé en ce qu'il est constitué essentiellement de deux profilés de guidage articulés symétriquement l'un par rapport à l'autre par leur extrémité avant, pliés chacun selon une ligne brisée (2, 3, 4) située entièrement dans un plan passant par une droite horizontale (X) située dans le plan de symétrie longitudinale de l'engin, passant par un point situé sur l'avant (A) au niveau de l'oeil du conducteur et par la projection sur le sol de l'extrémité latérale de l'instrument tracté ou le point fictif (C) correspondant; le point situé sur l'avant (A) étant confondu avec le point de raccordement et d'articulation des deux profilés de guidage.

4. Dispositif de guidage selon la revendication 3, caractérisé en ce que la position des profilés de guidage par rapport à l'engin est déterminée par l'intermédiaire de règles semi-circulaires graduées (5), solidaires de l'engin, et de curseurs (7) coulissants sur ces règles.

5. Dispositif de guidage selon la revendication 4, caractérisé en ce que les règles semi-circulaires graduées (5) maintenant les profilés de guidage en position par rapport à l'engin (1) sont disposées dans des plans parallèles perpendiculaires à la direction longitudinale de l'engin.

6. Dispositif de guidage selon la revendication 5, caractérisé en ce que les graduations (6) des règles semi-circulaires (5) sont déterminées de façon à prendre en compte l'élévation (H) de l'oeil du conducteur par rapport au sol et le déport (W) à conserver par rapport à la ligne de référence.

7. Dispositif de guidage selon la revendication 6, caractérisé en ce que la graduation correspondant à une élévation de l'oeil (H) et à un déport (W) particulier est déterminée à l'aide d'une abaque.

8. Dispositif de guidage selon la revendication 4, caractérisé en ce que les curseurs coulissants (7) prennent appui sur les règles semi-circulaires graduées (5) par l'intermédiaire de deux galets, de profil approprié, situés d'un même côté, et d'une vis de pression située de l'autre côté, dans le plan médian des deux galets.

**Claims**

1. Guidance method, with perspective comparison, for agricultural vehicles or the like, consisting in aligning, with a reference line (8) present on the ground, all or part of a guide-line (AB) passing through a point (A), integral with the vehicle, situated at the front of the latter, at the eye level of the driver, which guide-line (AB) is determined as a function of the offset (W) to be maintained with respect to the reference line (8) present on the ground, in such a way that the said guide-line (AB) is situated in a plane passing through an imaginary, horizontal straight line (X) parallel to the longitudinal direction of the vehicle, passing through the point (A), and situated in the longitudinal plane of symmetry of the vehicle, and through the projection onto the ground of the lateral end of a towed instrument, fixed to the vehicle, or through an imaginary point (C) situated at a distance (W) from the vehicle which corresponds to that of the reference line (8) present on the ground, characterised in that the shape and the position of the guide-line (AB) with respect to the vehicle (1) are determined by adjusting, firstly, the height of the point (A) situated at the front to the height (H) of the eye of the driver of the vehicle, and by projecting onto the ground, in planes perpendicular to the longitudinal direction of the vehicle and arranged randomly between the point situated on the front of the vehicle (A) and a point (B) situated in the guide-line (AB) on the rear of the vehicle, the orthogonal projection, onto the said planes, of the corresponding lateral end of the towed instrument or of the imaginary point (C), in aligning, firstly, the first segment (2) of a broken line constituting the guide-line (AB) with a straight line (Y) joining the point situated on the front (A) of the vehicle to the projection, onto the ground, of the orthogonal projection, onto the randomly selected perpendicular plane situated furthest forwards, of the corresponding lateral end of the towed instrument or of the imaginary point (C), in aligning the following segment (3) of the guide-line (AB) with a straight line joining the rear end of the preceding segment (2) to the projection onto the ground of the orthogonal projection, onto the following perpendicular plane, of the corresponding lateral end of the towed instrument or of the imaginary point (C) and in continuing in this manner, step by step, with respect to each of the following random planes, until the last segment (4) of the guide-line (AB) coincides with a straight line (Z) directly joining the rear end of the preceding segment (3) to the projection, onto the ground, of the corresponding lateral end of the towed instrument, or to the imaginary point (C).

2. Method according to Claim 1, characterised in that the image of the guide-line (AB) is displayed on the windscreen of the vehicle by direct light projection, back-projection or printing.

3. Device for applying the method according to Claims 1 and 2, characterised in that it essentially consists of two guide profiles articulated symmetrically with respect to each other by way of their front end, each bent in a broken line (2, 3, 4) situated entirely within a plane passing through a horizontal straight line (X) situated in the longitudinal plane of symmetry of the vehicle, passing through a point situated on the front (A) at the eye level of the driver, and through the projection, onto the ground, of the lateral end of the towed instrument or the corresponding imaginary point (C); the point situated on the front (A) coinciding with the connection and articulation point of the two guide profiles.

4. Guide device according to Claim 3, characterised in that the position of the guide profiles with respect to the vehicle is determined via graduated semi-circular rules (5) integrally connected to the vehicle, and cursers (7) sliding on these rules.

5. Guide device according to Claim 4, characterised in that the graduated semi-circular rules (5) holding the guide profiles in position with respect to the vehicle (1) are arranged in parallel planes perpendicular to the longitudinal direction of the vehicle.

6. Guide device according to Claim 5, characterised in that the graduations (6) of the semi-circular rules (5) are determined so as to take into account the elevation (H) of the eye of the driver with respect to the ground, and the offset (W) to be maintained with respect to the reference line.

7. Guide device according to Claim 6, characterised in that the graduation corresponding to a particular elevation of the eye (H) and to a particular offset (W) is determined with the aid of a nomogram.

8. Guide device according to Claim 4, characterised in that the sliding cursers (7) bear on the graduated semi-circular rules (5) via two rollers, of an appropriate profile, situated on the same side, and via a pressure screw situated on the other side, in the mid-plane of the two rollers.

## Patentansprüche

1. Verfahren zum Steuern von landwirtschaftlichen oder anderen Maschinen durch Perspektivenvergleich, welches darin besteht, daß eine Führungslinie (AB) ganz oder teilweise mit einer auf dem Boden vorhandenen Bezugslinie (8) zur Deckung gebracht wird, wobei die Führungslinie durch einen in Augenhöhe vor dem Fahrer an der Maschine festgelegten Punkt (A) geht und in Abhängigkeit des beizubehaltenden Versatzes (W) der auf den Boden gezogenen Bezugslinie (8) so bestimmt ist, daß die Führungslinie (AB) in einer Ebene liegt, welche durch eine gerade, horizontale fiktive Line (X) geht, wobei die Linie (X) parallel zu der Längsrichtung der Maschine und durch den Punkt (A) verläuft und in der Längssymmetrieebene der Maschine liegt, und welche durch die Projektion der seitlichen Begrenzung eines gezogenen, mit der Maschine verbundenen Werkzeuges auf den Boden geht, oder durch einen fiktiven Punkt (C), der in einem Abstand (W) von der Maschine liegt, wobei der Abstand (W) demjenigen der Bezugslinie (8) zur Maschine entspricht, **dadurch gekennzeichnet,** daß die Form und die Lage der Führungslinie (AB) in bezug auf die Maschine (1) dadurch bestimmt werden, daß zunächst die Höhe des vorne liegenden Punktes (A) auf die Augenhöhe (H) des Fahrers der Maschine eingestellt und daß in zur Längsrichtung der Maschine senkrechten Ebenen, welche beliebig zwischen dem vorne auf der Maschine befindlichen Punkt (A) und dem auf der Führungslinie (AB) hinten an der Maschine befindlichen Punkt (B) angeordnet sind, die orthogonale Projektion der dem gezogenen Werkzeug oder dem fiktiven Punkt (C) entsprechenden Seitenkante auf diese Ebenen auf den Boden projiziert werden;
um zunächst das erste Segment (2) einer die Führungslinie (AB) bildenden, geknickten Linie mit einer Geraden (Y) in Übereinstimmung zu bringen, welche den vorne an der Maschine befindlichen Punkt (A) mit der Projektion auf den Boden der orthogonalen Projektion auf der beliebig gewählten senkrechten Ebene verbindet, die am weitesten vorne von der dem gezogenen Werkzeug oder dem fiktiven Punkt (C) entsprechenden Seitenkante angeordnet ist, und um das folgende Segment (3) der Führungslinie (AB) mit einer Geraden in Übereinstimmung zu bringen, welche das hintere Ende des vorhergehenden Segments (2) mit der Projektion auf den Boden der orthogonalen Projektion von der dem gezogenen Werkzeug oder dem fiktiven Punkt (C) entsprechenden Seitenkante auf der nachfolgenden senkrechten Ebene verbindet, und
um bezüglich jeder der beliebigen folgenden Ebenen schrittweise so zu verfahren, bis das letzte Segment (4) der Führungslinie (AB) mit einer Geraden (Z) übereinstimmt, die direkt das hintere Ende des vorhergehenden Segments (3) mit der Projektion auf den Boden von der dem gezogenen Werkzeug oder dem fiktiven Punkt (C) entsprechenden Seitenkante verbindet.

2. Verfahren nach Anspruch 1, **dadurch gekennzeichnet, daß** das Bild der Führungslinie (AB) auf der Windschutzscheibe der Maschine durch direkte Lichtprojektion, Retroprojektion oder Aufdruck sichtbar gemacht wird.

3. Vorrichtung zur Durchführung des Verfahrens nach den Ansprüchen 1 und 2, **dadurch gekennzeichnet, daß** sie im wesentlichen aus zwei Führungsprofilen besteht, die symmetrisch zueinander mit ihren vorderen Enden gelenkig miteinander verbunden sind, wobei jedes gemäß einer geknickten Linie (2, 3, 4) gebogen ist, die gänzlich in einer Ebenen liegt, wobei die Ebene durch eine horizontale, in der Längssymmetrieebene der Maschine gelegene Gerade (X) führt, welche durch einen vorne, auf Augenhöhe des Fahrers befindlichen Punkt (A) geht, und durch die Projektion der Seitenkante des gezogenen Werkzeugs oder dem entsprechenden Punkt (C) auf den Boden führt, wobei der vorne gelegene Punkt (A) mit dem Verbindungs- und Anlenkpunkt der beiden Führungsprofile verschmilzt.

4. Führungsvorrichtung nach Anspruch 3, **dadurch gekennzeichnet, daß** die Lage der Führungsprofile bezüglich der Maschine mittels halbkreisförmiger Skalenelemente (5) an der Maschine und auf diesen Skalenelementen verschiebbaren Positionsmarkierern (7) bestimmt ist.

5. Führungsvorrichtung nach Anspruch 4, **dadurch gekennzeichnet, daß** die halbkreisförmigen Skalenelemente (5), die die Führungsprofile in ihrer Lage bezüglich der Maschine (1) halten, in parallelen, zur Längsrichtung der Maschine senkrechten Ebenen angeordnet sind.

6. Führungsvorrichtung nach Anspruch 5, **dadurch gekennzeichnet, daß** die Skaleneinteilungen (6) der Skalenelemente (5) so festgelegt sind, daß man der Höhe (H) der Augen des Fahrers bezüglich des Bodens und der einzuhaltenden Verschiebung (W) bezüglich der Bezugslinie Rechnung trägt.

7. Führungsvorrichtung nach Anspruch 6, **dadurch gekennzeichnet, daß** die Skaleneinteilung entsprechend einer Augenhöhe (H) und einer bestimmten Verschiebung (W) mittels eines Abakus' bestimmt wird.

8. Führungsvorrichtung nach Anspruch 4, **dadurch gekennzeichnet, daß** die verschiebbaren Positionsmarkierer (7) mittels zweier geeignet geformter Rädchen, die auf einer selben Seite sitzen, und mittels einer auf der anderen Seite auf der Mittelebene der beiden Rädchen sitzenden Befestigungsschraube auf den halbkreisförmigen Skalenelementen (5) befestigt sind.

# FIG·1

# FIG-2

# FIG.3

# FIG.4

EP 0 274 936 B1